(19) Europäisches Patentamt
European Patent Office
Office européen des brevets

(11) EP 2 781 368 B1

(12) EUROPEAN PATENT SPECIFICATION

(45) Date of publication and mention
of the grant of the patent:
**08.08.2018 Bulletin 2018/32**

(21) Application number: **12849234.5**

(22) Date of filing: **12.11.2012**

(51) Int Cl.:
**B60C 9/28** *(2006.01)*    **B60C 11/01** *(2006.01)*

(86) International application number:
**PCT/JP2012/007235**

(87) International publication number:
**WO 2013/073153 (23.05.2013 Gazette 2013/21)**

(54) **HEAVY LOAD PNEUMATIC RADIAL TIRE**

SCHWERLAST-RADIALLUFTREIFEN

PNEUMATIQUE RADIAL POUR POIDS LOURDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2011   JP 2011249153**

(43) Date of publication of application:
**24.09.2014   Bulletin 2014/39**

(73) Proprietor: **Bridgestone Corporation
Tokyo 104-8340 (JP)**

(72) Inventor: **YAMADA, Atsushi
Kodaira-shi
Tokyo 187-8531 (JP)**

(74) Representative: **Oxley, Robin John George et al
Marks & Clerk LLP
90 Long Acre
London WC2E 9RA (GB)**

(56) References cited:
**CA-A1- 1 183 438      JP-A- H 058 607
JP-A- S58 126 204     JP-A- 2006 182 125
US-A- 3 581 794**

**Description**

TECHNICAL FIELD

The present invention relates to a heavy load pneumatic radial tire, and in particular to a heavy load pneumatic radial tire with improved wear performance.

BACKGROUND ART

Conventionally, in heavy load pneumatic radial tires such as tires for trucks and buses, tires for construction vehicles, and the like, a variety of ideas have been adopted to improve wear performance.

In particular, as a way of improving both the wear resistance and resistance to uneven wear of the tire, Patent Literature 1 for example discloses a tire in which a belt reinforcing layer and inclined belt layers are provided in order on the radial direction outer side of the tire carcass.

According to the above structure, first of all the inclined belt layers increase the in-plane shear rigidity of the tread rubber on the surface in the tire circumferential direction and width direction and increase the wear resistance of the tire.

Additionally, the belt reinforcing layer suppresses growth of the tread rubber in the radial direction, making the radial growth amount of the tread rubber uniform in the tire width direction and improving the tire's resistance to uneven wear.

This structure is also useful from the perspective of maintaining tire shape and durability in the face of lower tire aspect ratio and higher weight in recent years.

CITATION LIST

Patent Literature

PTL 1: JP2009-184371A. Attention is also drawn to the disclosures of CA 1,183,438, on which the preamble of claim 1 is based, and US 3, 581, 794.

SUMMARY OF INVENTION

With the tire disclosed in Patent Literature 1, however, the wear resistance and resistance to uneven wear cannot yet be considered sufficient, and there is a demand for a way to further improve these aspects of wear performance, in particular resistance to uneven wear.

The present invention has been conceived in light of the above problem, and it is an object thereof to provide a heavy load pneumatic radial tire with improved resistance to uneven wear.

The inventor intensely studied how to solve the above problem.

As a result, the inventor discovered that uneven wear due to the above tire structure is caused by how the difference in the amount of wear is large between the width direction inner side and width direction outer side of the edge of the belt reinforcing layer.

The inventor also newly discovered that the amount of wear can be made uniform across the entire width direction of the tread by positioning the width direction edge of the belt reinforcing layer further toward a width direction outer side than the tread edge.

Furthermore, the inventor discovered that the above-described in-plane shear rigidity can be further increased and the wear resistance of the tire enhanced by increasing the width in the width direction, over an appropriate range, of at least one layer among the inclined belt layers.

The present invention is based upon the above discoveries, and the main features thereof are as follows.

A heavy load pneumatic radial tire according to the present invention is as claimed in claim 1.

According to the present invention, it is possible to provide a heavy load pneumatic radial tire with excellent resistance to uneven wear by optimizing the width in the width direction of the belt reinforcing layer.

According to at least one embodiment of the present invention, it is also possible to improve the tire's wear resistance by optimizing the width in the width direction of the inclined belt layer.

Furthermore, according to at least one embodiment of the present invention, it is possible to maintain the tire's resistance to uneven wear and wear resistance in a high state even after tread wear by optimizing the shape of the tire outer surface.

According to at least one embodiment of the present invention, it is also possible to increase the durability of a heavy load pneumatic radial tire, as demanded in recent years, by setting the minimum distance from the tire outer surface to the belt reinforcing layer and inclined belt layers to be at least a certain distance.

BRIEF DESCRIPTION OF DRAWINGS

The present invention will be further described below with reference to the accompanying drawings, wherein:

FIG. 1 is a schematic cross-sectional diagram in the width direction of a tire according to an embodiment of the present invention;
FIG. 2 schematically illustrates displacement of the tread edge TE due to progression of wear;

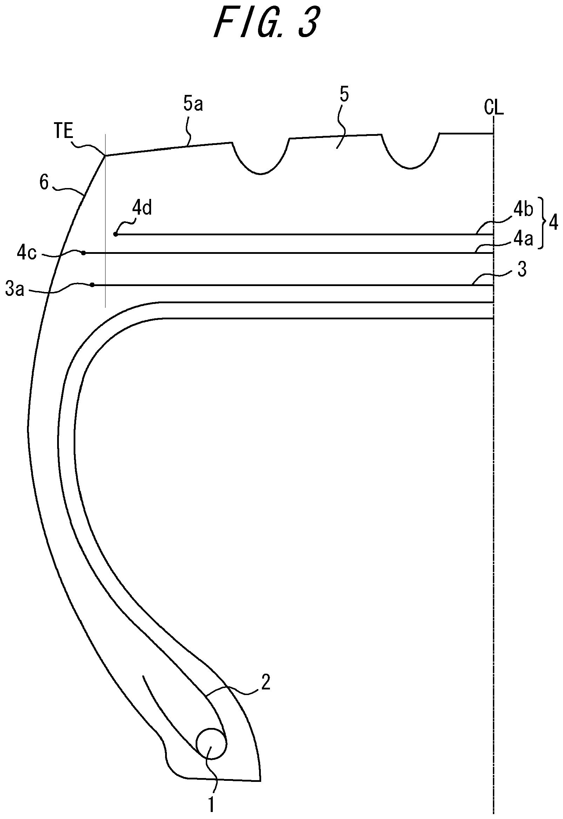

FIG. 3 is a schematic cross-sectional diagram in the width direction of a tire according to Inventive Example 6;

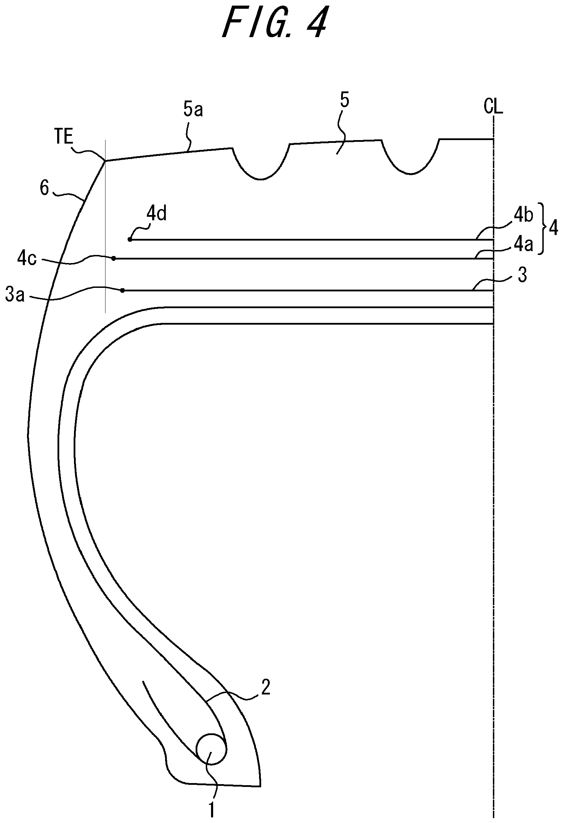

FIG. 4 is a schematic cross-sectional diagram in the width direction of a tire according to Conventional Example 1; and

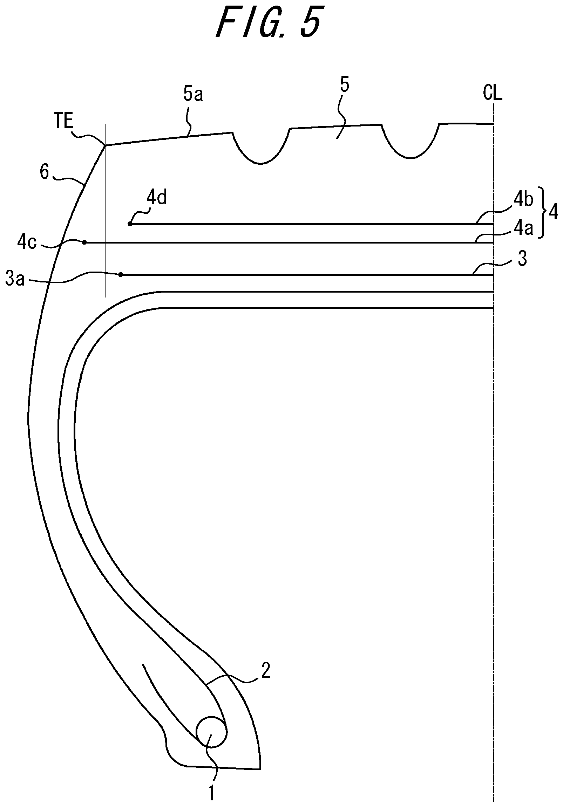

FIG. 5 is a schematic cross-sectional diagram in the width direction of a tire according to Conventional Example 2.

DESCRIPTION OF EMBODIMENTS

With reference to the drawings, the following describes a heavy load pneumatic radial tire (referred to below as a tire) according to the present invention in detail.

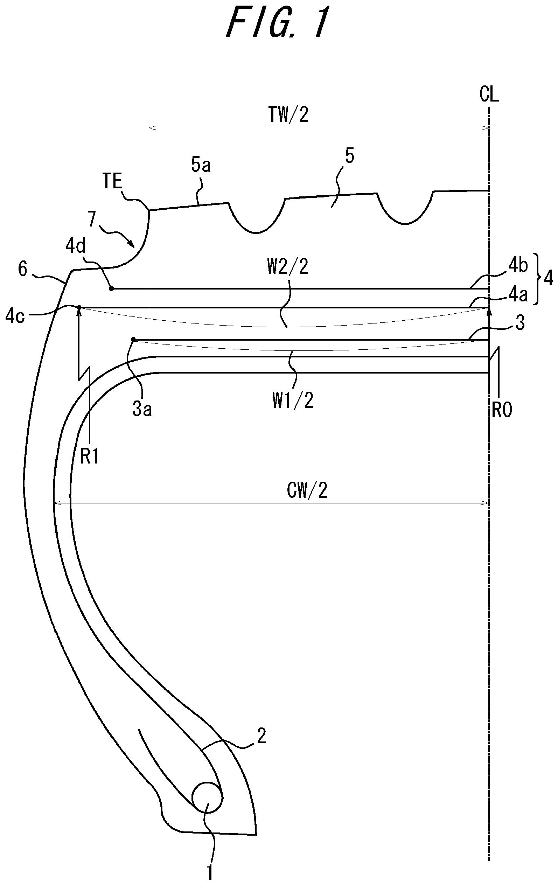

FIG. 1 is a schematic cross-sectional diagram in the width direction of a tire according to an embodiment of the present invention.
FIG. 1 only shows half of the tire, up to the tire equatorial plane CL.
FIG. 1 shows the shape when the tire is mounted on a prescribed rim, with prescribed internal pressure applied, and is in a no-load condition.
As shown in FIG. 1, the tire according to the present invention includes in order, on a radial direction outer side of a carcass 2 extending toroidally between a pair of bead portions (bead core 1 in the illustrated example), at least one belt reinforcing layer 3, two or more inclined belt layers 4, and a tread 5.
In the illustrated example, the belt reinforcing layer 3 is composed of one layer formed by cords that are roughly parallel to the tire circumferential direction and extend at an inclination angle of, for example, 1° to 2°. The belt reinforcing layer 3 may, for example, be formed by spirally winding narrow strips in the circumferential direction.
In the illustrated example, the inclined belt layers 4 are composed of two layers (4a, 4b) extending in the tire circumferential direction at an inclination angle of 40° to 60° and are formed by cords that intersect between layers.
In this disclosure, a "prescribed rim" refers to a rim prescribed by valid industrial standards for the region in which the tire is produced or used, such as the "JATMA (Japan Automobile Tyre Manufacturers Association) Year Book" in Japan, the "ETRTO (European Tyre and Rim Technical Organisation) Standard Manual" in Europe, and the "TRA (Tire and Rim Association, Inc.) Year Book" in the United States of America. Furthermore, "prescribed internal pressure" refers to an air pressure (maximum air pressure) corresponding to the maximum load capability of the tire under the standards of JATMA or the like for a tire of applicable size.
As shown in FIG. 1, when the tire according to the present invention is mounted on a prescribed rim, with prescribed internal pressure applied, and is in a no-load condition, it is crucial that the width direction edge 3a of the belt reinforcing layer 3 be located further toward the width direction outer side than the tread edge TE.
In this way, the effect of suppressing the above-described growth of the tread rubber in the radial direction due to the belt reinforcing layer 3 is achieved across the entire width direction of the tread. Therefore, the amount of wear can be made uniform across the entire width direction of the tread, thereby improving the tire's resistance to uneven wear.
Specifically, the width W1 in the width direction of the belt reinforcing layer 3 is preferably greater than 100% and less than 105% of the tread width TW. The reason is that when the ratio W1/TW exceeds 100%, the amount of wear can be made uniform across the entire width direction of the tread, whereas when the ratio W1/TW is less than 105%, the occurrence of separation at the belt edge due to increased deformation at the belt edge can be suppressed, thereby suppressing a reduction in durability.
The "tread width TW" refers to the distance in the tire width direction between both tread edges TE in a tire width direction cross-section when the tire is mounted on a prescribed rim, with prescribed internal pressure applied and in a no-load condition.
The "maximum width CW of the carcass 2" is defined as the maximum width, in a tire width direction cross-section, of the carcass line that is formed when the tire is mounted on a prescribed rim, with prescribed internal pressure applied and in a no-load condition.
The width W1 in the width direction of the belt reinforcing layer 3 is preferably at least 70% and at most 90% of the maximum width CW of the carcass 2.
The reason is that by setting the ratio W1/CW to be at least 70%, a minimum degree of belt portion hoop effect of the radial tire can be ensured, whereas a ratio W1/CW not exceeding 90% is necessary to achieve a regular radial tire belt width.

In the tire according to the present invention, the width W2 in the width direction of the inclined belt layer, among the inclined belt layers 4, with the largest width in the width direction (belt layer 4a in the illustrated example) is preferably greater than 100% and less than 110% of the tread width TW.

The reason is that by setting the width W2 of the widest inclined belt layer to be greater than 100% of the tread width TW (i.e. setting the ratio W2/TW to exceed 100%), the above-described in-plane shear rigidity of the tread can be increased across the entire width direction of the tread, thereby further increasing the tire's wear resistance.

On the other hand, by setting the width W2 to be less than 110% of the tread width TW (i.e. setting the ratio W2/TW to be less than 110%), the occurrence of separation at the belt edge due to increased deformation at the belt edge can be suppressed, thereby suppressing a reduction in durability.

Furthermore, the width W2 in the width direction of the widest inclined belt layer 4a is preferably larger than the width W1 in the width direction of the belt reinforcing layer 3.

The reason is that by setting the width W2 to be larger than the width W1, deformation of the width direction edge of the belt reinforcing layer 3 can be effectively suppressed.

Note that when the width W2 is made larger than the width W1, cushion rubber is preferably provided in order to ensure the initial shape of the product tire by preventing the edge 4c of the inclined belt layer 4a from dropping toward the radial direction inner side.

This cushion rubber is preferably provided in a region toward the radial direction inner side from the edge 4c of the inclined belt layer 4a and adjacent to the edge 3a of the belt reinforcing layer.

When the tire is mounted on a prescribed rim, with prescribed internal pressure applied, and is in a no-load condition, R0 is defined as the curvature radius, at a position of intersection with the tire equatorial plane CL, of the belt layer 4a having the greatest width in the width direction within the inclined belt 4, and R1 is defined as the curvature radius of the belt layer 4a at the edge 4c. With these definitions, the tire according to the present invention preferably satisfies the following expression.

$$2(R0 - R1)/W2 \leq 0.06$$

The reason for reducing the radius difference in the tire width direction to be in the above range is that the circumferential shear deformation of interlayer rubber between the inclined belt layers and the belt reinforcing layer, in particular between the edges of the inclined belt layers and the edges of the belt reinforcing layer, can be suppressed. Therefore, belt separation occurring between an adjacent inclined belt layer and belt reinforcing layer can be suppressed, ensuring the durability of the tire.

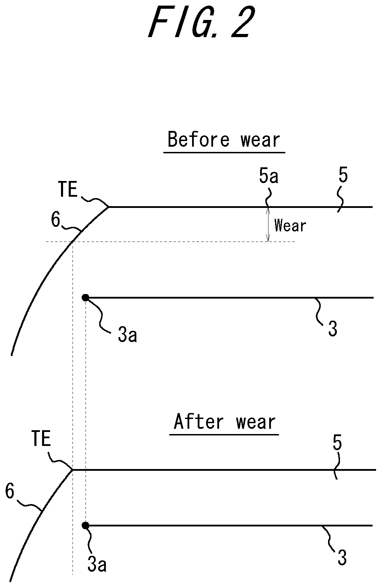

As illustrated schematically in FIG. 2, a region of approximately 5 mm to 20 mm towards the radial direction inner side from the tire tread surface 5a is a region in which tread rubber becomes worn as the tire is used.

Accordingly, the tread edge TE is displaced toward the width direction outer side as the tread rubber becomes worn.

Therefore, as wear progresses in the tread rubber, the edge 3a of the belt reinforcing layer 3 may become located further on the width direction inner side than the tread edge TE, preventing the above-described effect of suppressing wear and uneven wear from being achieved.

In FIG. 2, the belt reinforcing layer 3 is illustrated as an example, yet the same is true for the relationship between the tread edge TE and the edges 4c and 4d of the belt layer 4.

Therefore, in the present invention, as illustrated in FIG. 1, the tire outer surface 6 preferably has an annular recess 7 curving convexly towards the tire width direction inner side in a range of approximately 5 mm to 35 mm further toward the tire radial direction inner side than the tread edge TE.

In this way, even if tread wear progresses, displacement of the tread edge TE toward the width direction outer side nearly stops. Accordingly, even if tread wear progresses, the edge 3a of the belt reinforcing layer and the edges 4c and 4d of the belt layer 4 can be positioned further toward the width direction outer side than the tread edge TE. Hence, even after progression of tread wear, the effects of improving the wear resistance and the resistance to uneven wear can be achieved.

Note that by making the shape, in a width direction cross-section, of the recess 7 be deeply convex in the width direction, the above effects can be achieved to a higher degree.

Further toward the tire radial direction inner side than the tread edge TE, the shortest distance d (mm) from the tire outer surface 6 to the belt reinforcing layer 3 and inclined belt layers 4a and 4b is preferably 10 mm or more.

The reason is that by ensuring an interval of at least 10 mm between the tire outer surface 6 and each of the reinforcing members, i.e. the belt reinforcing layer 3 and the inclined belt layers 4a and 4b, the occurrence of cracks at the belt edge can be prevented, thereby improving the durability of the tire.

The interval in the radial direction between the thickness center position of cords constituting the belt reinforcing layer 3 and the thickness center position of cords constituting the belt layer 4a adjacent to the belt reinforcing layer 3 is preferably 1.8 to 7.0 times the diameter of the cords constituting the belt reinforcing layer 3.

The reason is that by ensuring a sufficient interval of 1.8 times or more, the circumferential shear deformation, which concentrates at the edge 3a of the belt reinforcing layer 3 and the edge 4c of the belt layer 4a, can be effectively reduced by the rubber between the belt reinforcing layer 3 and the belt layer 4a, thereby preventing breakage of the rubber between the belt reinforcing layer 3 and the belt layer 4a due to the circumferential shear deformation.

Furthermore, by setting the interval to be at most 7.0 times the above cord diameter, when the belt reinforcing layer 3 is provided at an appropriate position, the position of the outermost reinforcing layer 4b can be prevented from being too far to the radial direction outer side, thereby preventing early exposure of the outermost reinforcing layer 4b due to wear. On the other hand, when the outermost belt layer 4b is provided at an appropriate position, the position of the belt reinforcing layer 3 can be prevented from being too far to the radial direction inner side, an excessive increase in the radial direction growth at the belt reinforcing layer edge can be suppressed when internal pressure is applied, and separation of rubber at the edges can be suppressed. In other words, in either case, the durability of the tire can be ensured.

EXAMPLES

In order to confirm the effects of the present invention, tires according to Inventive Examples 1 to 17 were produced, and tires according to Conventional Examples 1 and 2 were also prepared. Tire performance was then evaluated by experiment.

Table 1 lists the specifications for each tire.

In Table 1, TW represents the tread width, W1 represents the width in the width direction of the belt reinforcing layer, and W2 represents the width in the width direction of the inclined belt, within the inclined belt layer, having the largest width in the width direction.

Furthermore, in Table 1, R0 represents the curvature radius, at a position of intersection with the tire equatorial plane, of the widest inclined belt layer, and R1 represents the curvature radius at the belt edge of the widest inclined belt layer.

Furthermore, d (mm) represents the shortest distance from the tire outer surface to the belt reinforcing layer and inclined belt layers.

Also, "includes recess" means that in a radial direction, in a range of 5 mm to 35 mm further toward the radial direction inner side than the tread edge TE, the tire outer surface has a recess curving convexly towards a tire width direction inner side.

Note that these shapes are defined when the tire is mounted on a prescribed rim, with prescribed internal pressure applied, and is in a no-load condition.

[Table 1]

|  | FIG. | W1/TW (%) | W2/TW (%) | 2(R0 - R1)/W2 | d (mm) | Tire outer suface |
|---|---|---|---|---|---|---|
| Inventive Example 1 | FIG. 1 | 101 | 97 | 0.04 | 12 | Includes recess |
| Inventive Example 2 | FIG. 1 | 101 | 106 | 0.07 | 12 | Includes recess |
| Inventive Example 3 | FIG. 1 | 101 | 106 | 0.06 | 12 | Includes recess |
| Inventive Example 4 | FIG. 1 | 101 | 106 | 0.04 | 12 | Includes recess |
| Inventive Example 5 | FIG. 1 | 101 | 106 | 0.09 | 12 | Includes recess |
| Inventive Example 6 | FIG. 3 | 101 | 106 | 0.04 | 12 | Does not include recess |
| Inventive Example 7 | FIG. 1 | 101 | 106 | 0.04 | 7 | Includes recess |
| Inventive Example 8 | FIG. 1 | 101 | 109 | 0.07 | 12 | Includes recess |
| Inventive Example 9 | FIG. 1 | 101 | 113 | 0.07 | 12 | Includes recess |
| Inventive Example 10 | FIG. 1 | 105 | 106 | 0.07 | 12 | Includes recess |
| Inventive Example 11 | FIG. 1 | 105 | 106 | 0.06 | 12 | Includes recess |
| Inventive Example 12 | FIG. 1 | 105 | 109 | 0.05 | 12 | Includes recess |
| Inventive Example 13 | FIG. 1 | 105 | 113 | 0.05 | 12 | Includes recess |
| Inventive Example 14 | FIG. 1 | 107 | 106 | 0.08 | 12 | Includes recess |

(continued)

| | FIG. | W1/TW (%) | W2/TW (%) | 2(R0 - R1)/W2 | d (mm) | Tire outer suface |
|---|---|---|---|---|---|---|
| Inventive Example 15 | FIG. 1 | 107 | 106 | 0.06 | 12 | Includes recess |
| Inventive Example 16 | FIG. 1 | 107 | 109 | 0.02 | 12 | Includes recess |
| Inventive Example 17 | FIG. 1 | 107 | 113 | 0.02 | 12 | Includes recess |
| Conventional Example 1 | FIG. 4 | 77 | 97 | 0.09 | - | Does not include recess |
| Conventional Example 2 | FIG. 5 | 86 | 102 | 0.07 | - | Does not include recess |

The assessments were performed as follows.

<Wear Performance>

Each of the above tires with a tire size of 445/50R22.5 was mounted on a prescribed rim, internal pressure of 690 kPa was applied, and a load of 38 kN per tire was applied. The amount of wear in the tread rubber was measured after driving 30,000 km at a speed of 60 km/h.

Measurements were performed at three measurement locations: a tread width direction central position, and positions A and B respectively at 80% and 98% of the tread width towards the width direction inner side from the tread edge.

In Table 2, the wear resistance is assessed as an index for the amount of wear at the tread width direction central position, with the amount of wear for Conventional Example 1 as 100.

The index is smaller for a smaller amount of wear, indicating better wear resistance.

In Table 2, the resistance to uneven wear for each tire is indicated by an index for the amount of wear at positions A and B, with the amount of wear at the tread width direction central position as 100.

A value closer to 100 for these indices indicates better resistance to uneven wear.

Furthermore, in order to evaluate the wear performance after progression of wear, the same evaluation test of wear resistance and resistance to uneven wear as above was performed for the tires according to Inventive Example 4 and Inventive Example 6 after 10 mm of the tread had worn away. Table 3 lists the evaluation results for wear performance after progression of wear.

<Durability>

The tires according to Inventive Examples 1 to 17 and Conventional Examples 1 and 2 were mounted on a prescribed rim, and a high-speed durability drum test was performed under the conditions of an internal pressure of 690 kPa and a load of 38 kN. Under the above conditions, starting at a speed of 120 km/h in the drum, the speed was raised by 10 km/h every 30 minutes, and the time until tire failure was measured. Evaluation was made based on the measurement value. Table 2 lists the evaluation results.

In Table 2, the results are indicated as an index with the speed at which failure occurred for Inventive Example 1 as 100. A larger index indicates better durability.

[Table 2]

| | Amount of wear at tread width direction central position | Amount of wear at position A | Amount of wear at position B | Durability |
|---|---|---|---|---|
| Inventive Example 1 | 78 | 102 | 105 | 100 |
| Inventive Example 2 | 78 | 103 | 106 | 94 |
| Inventive Example 3 | 77 | 102 | 105 | 98 |
| Inventive Example 4 | 75 | 101 | 104 | 100 |
| Inventive Example 5 | 80 | 104 | 114 | 90 |

(continued)

| | Amount of wear at tread width direction central position | Amount of wear at position A | Amount of wear at position B | Durability |
|---|---|---|---|---|
| Inventive Example 6 | 76 | 103 | 110 | 100 |
| Inventive Example 7 | 76 | 100 | 103 | 87 |
| Inventive Example 8 | 75 | 102 | 104 | 92 |
| Inventive Example 9 | 74 | 102 | 103 | 88 |
| Inventive Example 10 | 75 | 101 | 104 | 90 |
| Inventive Example 11 | 75 | 101 | 103 | 97 |
| Inventive Example 12 | 75 | 101 | 102 | 96 |
| Inventive Example 13 | 74 | 101 | 102 | 93 |
| Inventive Example 14 | 77 | 103 | 111 | 85 |
| Inventive Example 15 | 76 | 102 | 104 | 95 |
| Inventive Example 16 | 75 | 101 | 105 | 94 |
| Inventive Example 17 | 73 | 100 | 104 | 95 |
| Conventional Example 1 | 100 | 106 | 143 | 100 |
| Conventional Example 2 | 94 | 102 | 127 | 100 |

[Table 3]

| After progression of wear | Amount of wear at tread width direction central position | Amount of wear at position A | Amount of wear at position B |
|---|---|---|---|
| Inventive Example 4 | 100 | 104 | 107 |
| Inventive Example 6 | 105 | 109 | 115 |

As Table 2 shows, all of the tires according to Inventive Examples 1 to 17 had improved wear resistance as compared to the tires according to Conventional Examples 1 and 2, with a reduced amount of wear in the tread width central portion. Furthermore, all of the tires according to Inventive Examples 1 to 17 had improved resistance to uneven wear as compared to the tires according to Conventional Examples 1 and 2, with a lesser difference between the amount of wear at position A and the amount of wear at position B.

Table 2 also shows that Inventive Example 4, in which the width in the width direction of the widest inclined belt layer was optimized, had better tire wear resistance than Inventive Example 1.

Furthermore, a comparison of Inventive Example 4 and Inventive Example 6 in Table 3 shows that Inventive Example 4, provided with a recess at an appropriate position on the tire outer surface, had both excellent wear resistance and resistance to uneven wear of the tire even after progression of wear.

A comparison of Inventive Example 2 and Inventive Example 3 in Table 2 also shows that Inventive Example 3, in which the shape of the widest inclined belt layer was optimized, had excellent tire durability as compared to Inventive Example 2. A comparison of Inventive Example 4 and Inventive Example 7 shows that Inventive Example 4, in which the above shortest distance d (mm) was optimized, had better durability than the tire according to Inventive Example 7.

REFERENCE SIGNS LIST

1: Bead core
2: Carcass
3: Belt reinforcing layer
4: Inclined belt layer
5: Tread
6: Tire outer surface
7: Recess

**Claims**

1. A heavy load pneumatic radial tire comprising in order, on a radial direction outer side of a carcass (2) extending toroidally between a pair of bead portions, at least one belt reinforcing layer (3), two or more inclined belt layers (4), and a tread (5), wherein when the tire is mounted on a prescribed rim, with prescribed internal pressure applied and in a no-load condition, a width direction edge (3a) of the at least one belt reinforcing layer (3) is located further toward a width direction outer side than a tread edge (TE), and **characterised in that** the tire satisfies the expression:

$$2 \times (R0 - R1)/W2 \le 0.06$$

where W2 is a width in the width direction of an inclined belt layer (4a), among the inclined belt layers (4), having a largest width in the width direction, R0 is a curvature radius, at an intersection with a tire equatorial plane (CL), of the inclined belt layer (4a) having the largest width in the width direction, and R1 is a curvature radius of the inclined belt layer (4a) having the largest width in the width direction at a belt edge (4c) thereof.

2. The heavy load pneumatic radial tire according to claim 1, wherein a width W1 in the width direction of the at least one belt reinforcing layer (3) is greater than 100% and less than 105% of a tread width (TW).

3. The heavy load pneumatic radial tire according to claim 1 or 2, wherein the width W2 is greater than 100% and less than 110% of a tread width (TW).

4. The heavy load pneumatic radial tire according to any one of claims 1 through 3, wherein further toward a radial direction inner side than the tread edge (TE), a tire outer surface (6) includes a recess (7) curving convexly towards a width direction inner side.

5. The heavy load pneumatic radial tire according to any one of claims 1 through 4, wherein further toward a radial direction inner side than the tread edge (TE), a shortest distance from a tire outer surface (6) to the at least one belt reinforcing layer (3) and the inclined belt layers (4) is 10 mm or more.

**Patentansprüche**

1. Schwerlast-Radialluftreifen, umfassend, in der genannten Reihenfolge, auf einer Radialrichtungsaußenseite einer Karkasse (2), welche sich toroidförmig zwischen einem Paar von Wulstabschnitten erstreckt, mindestens eine Gürtelverstärkungsschicht (3), zwei oder mehr geneigte Gürtelschichten (4) und eine Lauffläche (5), wobei

wenn der Reifen an einer vorgeschriebenen Felge montiert ist, mit einem vorgeschriebenen Innendruck beaufschlagt und in einem lastfreien Zustand ist, eine Breitenrichtungskante (3a) von der mindestens einen Gürtelverstärkungsschicht (3) weiter in Richtung einer Breitenrichtungsaußenseite befindlich ist als eine Laufflächenkante (TE), und **dadurch gekennzeichnet, dass** der Reifen folgenden Ausdruck erfüllt:

$$2 \times (R0 - R1)/W2 \leq 0{,}06$$

wobei W2 eine Breite in der Breitenrichtung einer geneigten Gürtelschicht (4a) ist, gewählt aus den geneigten Gürtelschichten (4), welche die größte Breite in der Breitenrichtung besitzen,

R0 ein Krümmungsradius an einer Schnittstelle mit einer Reifenäquatorebene (CL) der geneigten Gürtelschicht (4a) ist, welche die größte Breite in der Breitenrichtung besitzt, und

R1 ein Krümmungsradius der geneigten Gürtelschicht (4a) ist, welche die größte Breite in der Breitenrichtung an einer Gürtelkante (4c) hiervon besitzt.

2. Schwerlast-Radialluftreifen nach Anspruch 1, bei welchem eine Breite W1 in der Breitenrichtung der mindestens einen Gürtelverstärkungsschicht (3) größer als 100 % und kleiner als 105 % einer Laufflächenbreite (TW) ist.

3. Schwerlast-Radialluftreifen nach Anspruch 1 oder 2, bei welchem die Breite W2 größer als 100 % und kleiner als 110 % einer Laufflächenbereite (TW) ist.

4. Schwerlast-Radialluftreifen nach einem der Ansprüche 1 bis 3, bei welchem weiter in einer Radialrichtungsinnenseite als die Laufflächenkante (TE) eine äußere Reifenfläche (6) eine Vertiefung (7) umfasst, welche sich in konvexer Form in Richtung einer Breitenrichtungsinnenseite krümmt.

5. Schwerlast-Radialluftreifen nach einem der Ansprüche 1 bis 4, bei welchem weiter in einer Radialrichtungsinnenseite als die Laufflächenkante (TE) ein kürzester Abstand von einer Reifenaußenfläche (6) zu der mindestens einen Gürtelverstärkungsschicht (3) und zu den geneigten Gürtelschichten (4) 10 mm oder darüber beträgt.

## Revendications

1. Pneumatique radial pour poids lourds comprenant, dans l'ordre, sur un côté externe de direction radiale d'une carcasse (2) qui s'étend de façon toroïdale entre une paire de parties de talon, au moins une couche de renforcement de ceinture (3), deux couches de ceinture inclinées ou plus (4) et une bande de roulement (5), dans lequel :

lorsque le pneumatique est monté sur une jante prescrite, tandis qu'une pression interne prescrite est appliquée et dans une condition hors charge, un bord de direction de largeur (3a) de l'au moins une couche de renforcement de ceinture (3) est situé davantage en direction d'un côté externe de direction de largeur qu'un bord de bande de roulement (TE), et **caractérisé en ce que** le pneumatique satisfait l'expression :

$$2 \times (R0 - R1)/W2 \leq 0{,}06$$

expression dans laquelle :

W2 est une largeur dans la direction de largeur d'une couche de ceinture inclinée (4a), parmi les couches de ceinture inclinées (4), qui présente une largeur la plus importante dans la direction de largeur ;
R0 est un rayon de courbure, au niveau d'une intersection avec un plan équatorial de pneumatique (CL), de la couche de ceinture inclinée (4a) qui présente la largeur la plus importante dans la direction de largeur ; et
R1 est un rayon de courbure de la couche de ceinture inclinée (4a) qui présente la largeur la plus importante dans la direction de largeur au niveau d'un bord de ceinture (4c) afférent.

2. Pneumatique radial pour poids lourds selon la revendication 1, dans lequel une largeur W1 dans la direction de largeur de l'au moins une couche de renforcement de ceinture (3) est supérieure à 100 % et inférieure à 105 % d'une largeur de bande de roulement (TW).

3.  Pneumatique radial pour poids lourds selon la revendication 1 ou 2, dans lequel la largeur W2 est supérieure à 100 % et inférieure à 110 % d'une largeur de bande de roulement (TW).

4.  Pneumatique radial pour poids lourds selon l'une quelconque des revendications 1 à 3, dans lequel, davantage en direction d'un côté interne de direction radiale que le bord de bande de roulement (TE), une surface externe de pneumatique (6) inclut un évidement (7) qui est incurvé de façon convexe en direction d'un côté interne de direction de largeur.

5.  Pneumatique radial pour poids lourds selon l'une quelconque des revendications 1 à 4, dans lequel davantage en direction d'un côté interne de direction radiale que le bord de bande de roulement (TE), une distance la plus courte depuis une surface externe de pneumatique (6) jusqu'à l'au moins une couche de renforcement de ceinture (3) et jusqu'aux couches de ceinture inclinées (4) est de 10 mm ou plus.

# FIG. 1

# FIG. 2

Before wear

5a 5

TE

6

Wear

3a

3

After wear

5

TE

6

3a

3

# FIG. 3

# FIG. 4

# FIG. 5

**REFERENCES CITED IN THE DESCRIPTION**

**Patent documents cited in the description**

- JP 2009184371 A
- CA 1183438

- US 3581794 A